# EUROPEAN PATENT APPLICATION

(11) **EP 1 128 244 A2**
(43) Date of publication of application: **29.08.2001**
(21) Application number: 00113429.5
(22) Date of filing: 24.06.2000
(51) Int. Cl.: G05B 19/418

(54) **Network connection system for machine tools, particulary injection presses for plastics**

(30) Priority: 22.02.2000 IT MI000322
(71) Applicant: NEGRI BOSSI S.P.A., I-20093 Cologno Monzese (IT)
(72) Inventor: Meschia, Maurilio, 20040 Usmate (Milano) (IT)
(74) Representative: Petruzziello, Aldo

(57) **Abstract**

A network connection system for machine tools, particularly injection presses for plastics, comprising a plurality of machine tools (1) connected to a wireless network in order to share resources and exchange data, via a radio link, between a device (12) for radio communications provided on each machine tool (1) and a server (4) equipped with the device (12) for radio communications or at least one access unit (20) connected to a hard-wired network (10, 50).

## Description

The present invention refers to a system for network connection of machine tools, in particular injection presses for plastics.

In order to connect machines, such as machine tools, computers, peripherals and the like, to a server used for data collection, management and sharing, use is made of telecommunications networks that can be classified as LAN (Local Area Network). The present state of the art for network connection of machines provides solutions based on networks of the hard-wired type (connection via cable) irrespective of the type of connection that is to be created. The most widely used connection interfaces for linking machines in a network are: R/S 232 for point-to-point connections, RS 485, Ethernet, Token ring for multi-point and broadcast connections.

Ethernet networks are particularly widely used because of the features they are able to provide, such as speed of transmission, availability of hardware components, availability of software drivers, large number of users that can be connected in a network, and limited cost. Devices that employ the most widely used operating systems, such as DOS, Windows and Unix can be connected to Ethernet networks.

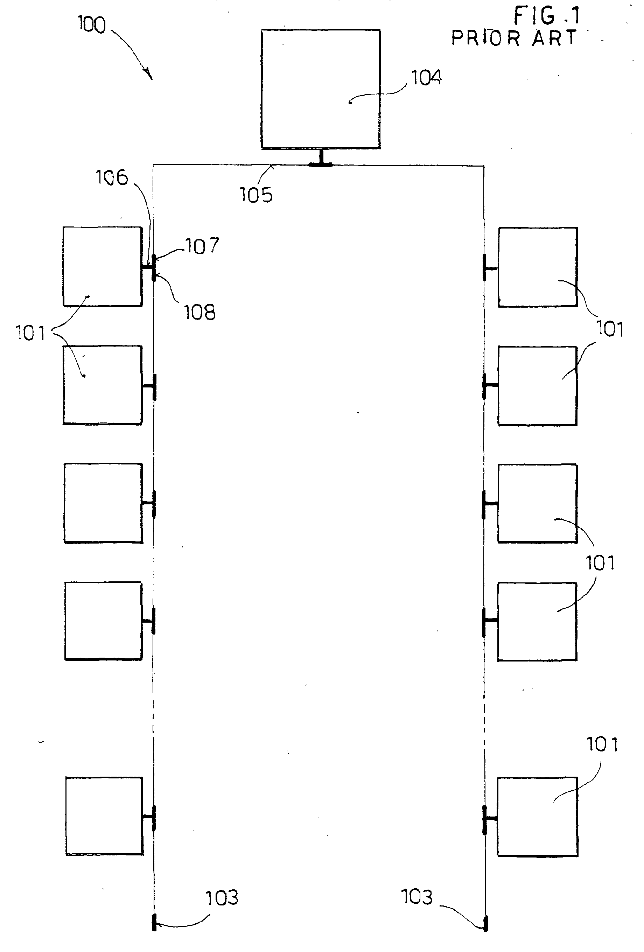

Figure 1 shows a first type of Ethernet network 100. The network 100 has a linear configuration, formed by means of coaxial cable connections 105, at the ends of which two terminations 103 are provided. A plurality of machines 101 is connected to the network by means of coaxial cable connections. A T connector 102 is installed on each machine 101, said T connector having a first end 106 connected to the machine, a second end 107 connected to a data input cable and a third end 108 connected to a data output cable. A server 104 for management of the network resources can be situated at any point of the network 100. With this configuration any break in the cable 105 leads to a loss of communication with all the devices 101 interlocked to said cable.

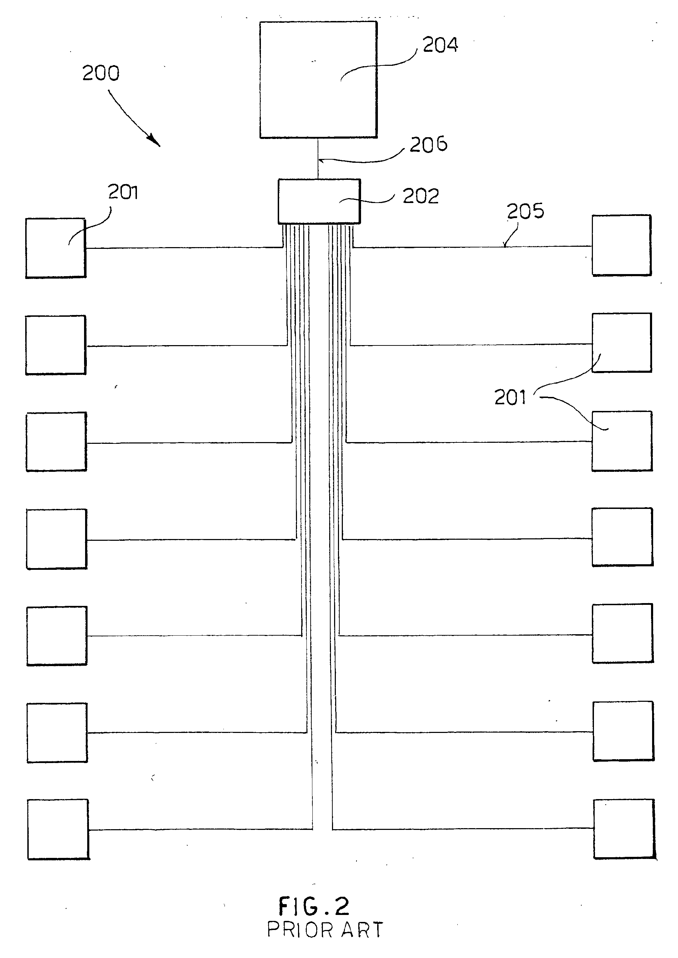

Figure 2 shows a second type of Ethernet network 200 with a star configuration, again obtained by means of connections 205 with a multipolar cable. A plurality of machines 201 are connected with a distributor element, generally called a hub 202, which acts as the centre of the network. A server 204 is connected by means of a branch 206 to the hub 202. With this configuration a break in the cable 205 causes only loss of communication with the relative device interlocked to said cable.

In both the configurations shown, the server sees all the elements of the network and can interact with them. Furthermore, the server can act as a bridge toward the other networks which can basically be of two types:
- local networks (LAN) different from the machine network.
- networks outside the plant (WAN).

Connection of the server to other local networks (for example to a company network where the data for production management, warehouse management etc. reside) is possible simply by using a network board suitable for the network to which the server must be connected. In this case it is possible to exchange data between these networks without sharing the same physical network. In the case of connection to outside networks, the local server, by means of devices for connection to telephone lines (PSDN) or data lines (ISDN, ADSL, ATM, etc.), makes point-to-point connections (remote access) or connections via the Internet.

Regardless of the type of network and its configuration, there remains a series of complications and drawbacks when attempting to use these networks in an industrial setting, as for example for connection of injection presses for plastic materials.

In fact difficulties arise in connecting a number of machines in a very large space because a very long network must be laid, with a very complex lay-out to reach all the machines. Consequently, whenever a machine is moved, the layout of the network has to be modified and connection of a machine to the network proves complex and takes a very long time.

Furthermore, the connection of the machines to the network is very fragile because of shaking of the machines, consequently the connecting cables must be protected, with a further waste of time and money.

Furthermore, each machine must be reached with a cable though which pass highfrequency signals that can be disturbed by interference coming from the machines, consequently the network shows little immunity to disturbances.

As a consequence of all these drawbacks, the end user is discouraged from installing new networks to interface the machines or other devices because of the difficulty in intervening on the lay-out of the plant. This copromises the possibility of providing services such as:
- Centralized production control so that a final user can perform real-time supervision of the operating status of the machines in the plant to compare the progress of the orders in production with the production plan;
- Monitoring of correct operation of the machines for preventive analysis by the technical assistance service in order to prevent machine failures and consequent production stoppages.
- Remote connection of the machine to a technical assistance centre for remote assistance purposes;

The object of the invention is to eliminate said drawbacks, providing a network connection system for machine tools, in particular injection presses for plastic materials, that is practical, versatile, reliable and easy to realize.

This object is achieved according to the invention with the characteristics listed in appended independent claim 1.

Preferred embodiments of the invention are apparent from the dependent claims.

In the network connection system for machine tools, in particular injection presses for plastic materials, according to the invention, provision is made for exploitation of a wireless radio link to connect the machines to a wireless network. Each machine is provided with a radio communications device, by means of which data can be exchanged with a computer acting as server to the network and also provided with a similar radio communications device, or alternatively the machines can communicate with a unit for access to a hard-wired network to which the server computer is connected.

The access unit (normally called the Access Point) to the local server can be connected thereto by means of a point-to-point hard-wired network (access point-local server) or a network with a plurality of users.

A single access point can connect a plurality of machines. In any case more than one access point can be provided depending upon the distribution of the machines, the surface area of the plant to be covered and the lay-out of the plant.

The devices that operate on the wireless network, whether they be situated on the machines or on the access points, can be of different types in compliance with different international standards. The most significant case is that of a network with components complying with the standards laid down by IEEE 802.11. In this case it is possible to use components that ensure high transmission speeds, simple installation, low cost and compatibility with hard-wired Ethernet networks. In case a plurality of access points complying with IEEE 802.11 is used, the network used for connection of these access points to the server is an Ethernet type hard-wired network.

The Ethernet network can be a linear network or a star network. In the latter case a hub must be provided in the network to establish the connection between the server, the various radio access points and any other devices connected to the network, such as computers, modems, printers, scanners, etc.

A particular case provides for the server to consist of the computer of one of the machines.

The server can be provided with various devices for connection to other networks which can be local networks (LAN) or networks outside the company (WAN, Wide Area Networks). In particular the server can be connected to a WAN network by means of a device such as a modem or router to make connections to the Internet or remote access point-to-point connections.

The advantages of the network connection system for machine tools, in particular injection presses for plastic materials according to the invention, appear obvious.

With said system there is the possibility of completely freeing the plant lay-out from the need to reach the machines or other devices with a data transmission network. Consequently the machines can be moved and distributed in the plant without any constraint.

The complete absence of wiring in the connection of the machines to the network makes it possible to achieve a highly resilient network and avoids interruptions caused by damage to the transmission line. Furthermore, thanks to the wireless connection one or more machines can be turned off without losing the connection for the others.

With the system according to the invention connection of the machines to the network proves extremely simple. In fact, from the moment of installation of the machine the connection of the machine to the network is immediately available. Furthermore, no network technician is needed when installing a new machine on the network since all setting up can be carried out by the manufacturer of the machine during testing procedures or remotely via the remote connection to the network server.

Network connection of the machines makes the data present on the machines available for management of automatic real-time production control. Furthermore it makes it possible to load onto the computer of the machine data such as new processing files, quantities required for production batches and in general all the data that would otherwise have to be set up directly on the machine. These data are available on the local server and on all other computers placed on the same network.

In the case of the server also acting as a bridge toward other networks, these data can be received or sent from computers situated on other LAN networks with which the server is connected.

In the case of the server being connected with an analogical or digital modem device for connection to other data networks, the network of the machines can be connected by means of a point-to-point connection with a remote computer or can be connected to the Internet. These types of connections make it possible to carry out services of remote assistance, machine monitoring or sending of service request messages by the machines.

Further characteristics of the invention will be made clearer by the detailed description that follows, referring to purely exemplary and therefore non limiting embodiments thereof, illustrated in the appended drawings, in which:
Figure 1 is a block diagram of a linear network according to the prior art;
Figure 2 is a block diagram of a star network according to the prior art;
Figure 3 is a block diagram illustrating a first embodiment of the network connection system for machine tools according to the invention, in which a linear hard-wired network is used;
Figure 4 is a block diagram illustrating a second embodiment of the network connection system for machine tools according to the invention, in which a hard-wired star network is used;
Figure 5 is a block diagram illustrating a third embodiment which contemplates the simplest case of a network connection system for machine tools, according to the invention.

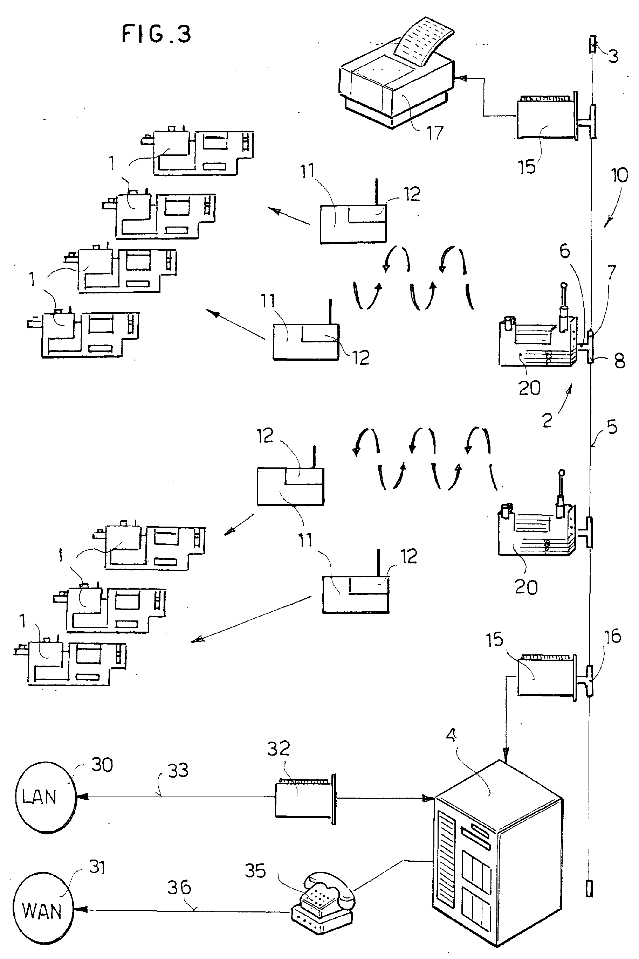

The network connection system for machine tools, in particular injection presses for plastics, according to the invention is described with the aid of Figures 3, 4 and 5.

Figure 3 shows a first embodiment of the invention.

An industrial plant comprises various groups of machine tools 1, particularly injection presses for plastic material. Each press 1 comprises a computer 11, such as an industrial computer for example, that controls operation of the machine and acts as a user interface to receive commands from the user. In each computer 11 of each press 1 a device 12 is installed for radio communications.

In the plant there is a hard-wired network 10, that is to say a network made by connections through a cable, such as a coaxial cable. The network 10 can be any type of local network (LAN). In the present embodiment the network 10 is a linear Ethernet network, similar to that previously illustrated in Figure 1. The network 10 has a coaxial cable line 5 at the ends of which two terminating elements 3 are provided.

Connected to the line 5 of the network 10 are access points 20 to the hard-wired network able to exchange data, via radio, with the radio communications devices 12 provided in the computers 11 of the presses 1. Clearly a single access point 20 can exchange data with a plurality of presses 1 or other machines provided with the radio communications device 12 and a machine 1 can also exchange data with different access points 20. There may be a plurality of access points 20 on the line 5 of the network 10 according to the distance to be covered for connection to the machines, the lat-out of the plant, the number of machines 1 and the number of production areas. In this manner the various machines 1 of the plant are connected to a wireless network.

The access point 20 is connected to the line 5 of the network 10 by means of a T connector 2, having a first end 6 connected to the access point 20, a second end 7 connected to a data input of the line 5 and a third end 8 connected to a data output of the line 5.

The radio band used by the devices 12 can occupy all the frequencies that national or international regulations make available for radio communications. In any case, in many frequency fields use of the radio band is subject to obtaining authorization from the national body responsible for such authorizations.

In the case of radio communications devices 12 complying with standard IEEE 802.11, the frequency used is in the band between 2.4 and 2.5 GHz. This frequency band is left free and no authorization is required for use of certified radio communications devices.

The network 10 must include at least one server 4 to manage the network. The server 4 can be a PC or a data processing unit not assimilable to a PC, such as a Workstation, Mainframe or the like.

The server 4 has a network board 15, such as an Ethernet board for example, for connection to the network 10. Said connection takes place by means of a T connector 16, substantially identical to the connector 2 described previously.

The network server 4 can be equipped in turn with various connection devices, for connection to other local networks (LAN) 30 or to networks (WAN) 31 outside the company.

For connection to another local network 30, the server 4 can have a LAN network board 32 and a cable connection 33.

For connection to a network outside the company (WAN), such as the Internet for example, the server 4 can have a modem or router 35 connected to a telephone line or a dedicated ISDN line 36. The modem 35 can be of the analogical type for connection to PSDN networks, or of the digital type for connection to ISDN, ADSL, ATM or other digital networks.

Other devices 17 provided with a network board 15 which is connected to the line 5 by means of a T connector 16 can be connected to the hard-wired line 5 of the network 10. The devices 17 can also be provided with the radio communications device 12 for connection via radio, and in this case they are connected via radio by means of the access points 20. The devices 17 can be modems, printers, scanners, copiers etc. In the case of the device 17 being a modem, the server 4 need not have the modem 35 and can be connected to the WAN network by means of the modem 17 which can be shared by all elements of the network 10.

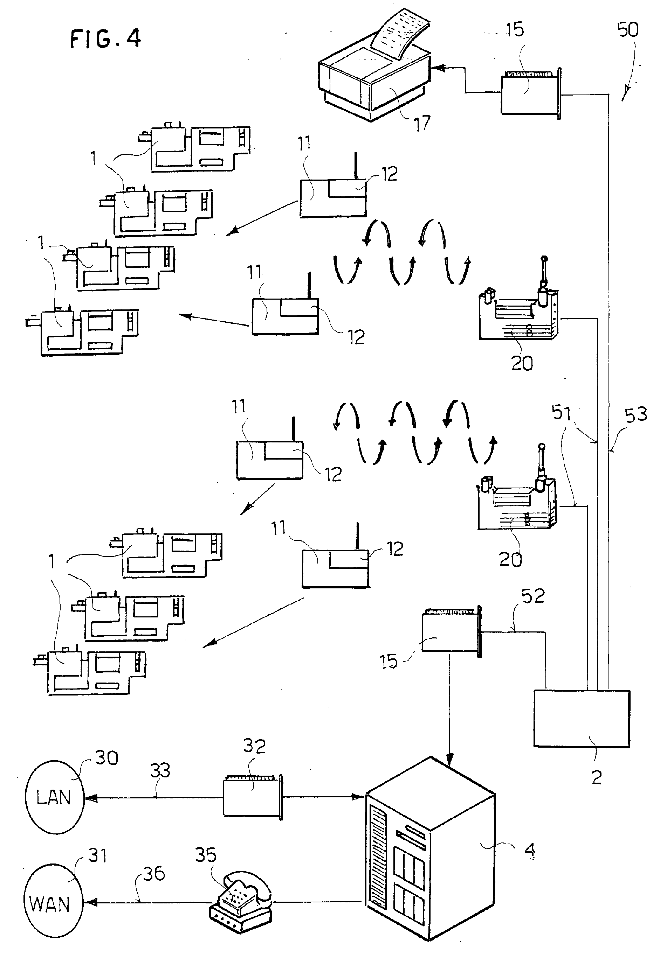

Figure 4 shows a second embodiment of the invention, in which elements that are the same or equivalent to those described in the first embodiment are denoted with the same reference numerals used in the first embodiment.

As in the first embodiment, each press 1 comprises a computer 11 with a radio communications device 12. Otherwise, in this second embodiment of the invention, a star-type Ethernet hard-wired network is provided. The star network 50 has a hub 2, to which access points 20 substantially identical to those described in the first embodiment are connected. The access points 20 exchange data via radio with the devices 12 installed in the computers 11 of the machines 1.

A server 4 provided with a network board 15 to connect to an Ethernet network, by means of a cable 52, is connected to the hub 2. The server 4 may have another network board 32 to connect to another LAN network 30 inside the company.

Peripheral devices 17, provided with the network board 15, are connected to the hub 2 by means of a cable 53.

An analogical or digital modem 35 is connected directly to the server 4 by means of a cable 54, as in the case seen in the first embodiment in Figure 3. Alternatively the modem 35 can be connected to the hub 2. The modem 35 is connected by means of a telephone line or a data line 36 to an external WAN network 31.

The main advantage of this star-shaped configuration is the fact that when a connection is interrupted on one of the cables 51, 53, 54, the devices interlocked by the uninterrupted cables continue to communicate with one another.

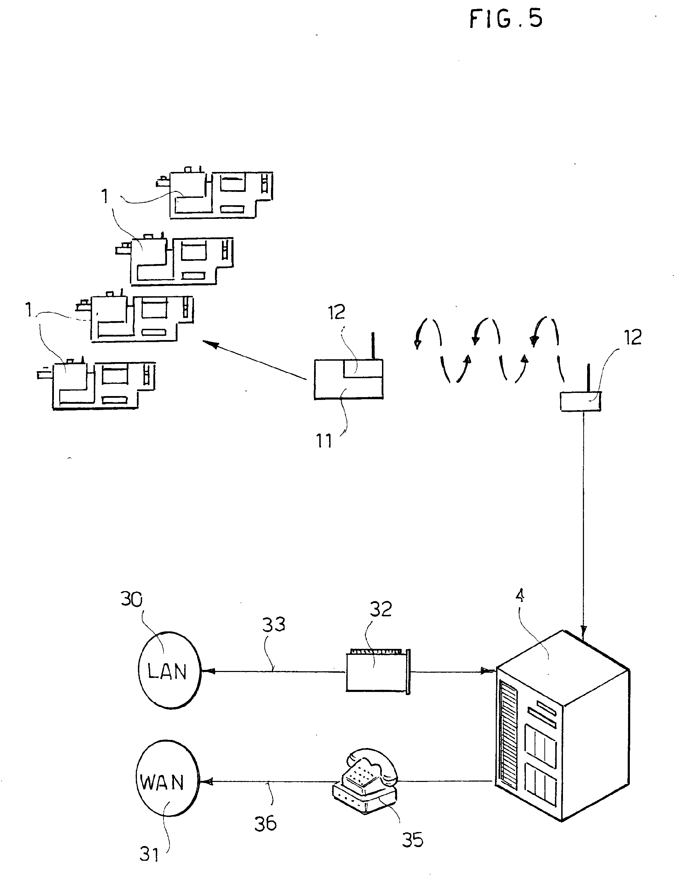

Figure 5 shows a third embodiment of the invention, in which elements that are the same or equivalent to those described in the previous embodiments are denoted with the same reference numerals used in the previous embodiments.

This third embodiment of the invention shows the simplest case of network connection of machine tools. Each machine 1 is provided with a computer 11 on which is installed a device 12 for the radio (wireless) connection the same as that described in the preceding embodiments.

The devices 12 of the computers 11 of the machines 1 communicate via radio with an identical radio communications device installed in a server 4. The computer acting as server can also be the computer 11 itself of one of the machines 1 connected in the network.

The server 4 has a network board 32 to be able to connect, though the hard-wired line 33, to a local network (LAN) 30. Moreover the server 4 is connected to a digital or analogical modem 35, which, through a telephone line or data line 36, can be connected to an external network (WAN) 31.

Numerous variations and modifications of detail within the reach of a skilled in the field can be made to the present embodiments, while still remaining within the scope of the invention, expressed in the appended claims.

## Claims

1. A network connection system for machine tools, in particular injection presses for plastics, comprising a plurality of machine tools (1) destined to be connected to a network to share common resources and exchange data, characterized in that said network is a wireless network and at least some of said machine tools (1) comprise, in a permanent or semi-permanent manner, a device (12) for connection to said wireless network, through radio communication in frequency bands available for radio communications, said device (12) for connection to the wireless network being able to communicate with a server (4), also provided with a device (12) for connection to the wireless network and/or with at least one access point (20) connected to a hard-wired network (10; 50).

2. A system according to claim 1, characterized in that between said devices (12) for connection to the wireless network and said at least one access point (20) data are exchanged in a frequency band ranging between 2.4 GHz and 2.5 GHz.

3. A system according to claim 1 or 2, characterized in that at least some of said machine tools have a computer (11) in which said device (12) for radio communications is installed.

4. A system according to any one of the preceding claims, characterized in that said wireless network and/or said hard-wired network (10; 50) is/are managed by a server (4).

5. A system according to claim 4, characterized in that said server (4) is connected to said hard-wired network (10; 50) through a hard-wired connection (16; 52) by means of network boards (15) for transmission via cable.

6. A system according to claim 4, characterized in that said server (4) is connected to said hard-wired network (10; 50) through a radio link, by means of said radio communications device (12).

7. A system according to claim 6, characterized in that said server is a computer (11) of one of the machine tools (1).

8. A system according to any one of the preceding claims, chracterized in that peripheral devices (17) are connected to said network (10; 50), through a hard-wired connection (16; 53), by means of network boards (15) for transmission via cable.

9. A system according to any one of the claims 1 to 7, characterized in that peripheral devices (17) are connected to said hard-wired network (10, 50) through a radio link, by means of devices (12) for radio transmission.

10. A system according to any one of claims 4 to 9, characterized in that said server (4) has devices (32, 35) for connection to another local network (LAN) (30) or to a WAN external network (31).

11. A system according to claim 10, characterized in that said device (32) for connection of the server (4) to another local network (LAN) (30) is a network board (32) for connection by cable or by radio link.

12. A system according to claim 10 or 11, characterized in that said device (35) for connection of the server (4) to another outside network (WAN) (31) is an analogical or digital modem (35).

13. A system according to claim 10 or 11, characterized in that said device (35) for connection of the server (4) to another outside network (WAN) (31) is a router.

14. A system according to any one of the preceding claims, characterized in that said network (10) is an Ethernet local network (LAN) of the linear type.

15. A system according to any one of claims 1 to 12, characterized in that said network (50) is an Ethernet local network (LAN) of the star type with a hub distributor device (2).
